# EUROPEAN PATENT APPLICATION

(11) **EP 4 715 904 A1**
(43) Date of publication of application: **25.03.2026**
(21) Application number: 24811007.4
(22) Date of filing: 15.05.2024
(51) Int. Cl.: H01M 4/525, H01M 4/36, H01M 4/1391

(54) **COATED ACTIVE MATERIAL, POSITIVE ELECTRODE, SECONDARY BATTERY, AND METHOD FOR MANUFACTURING POSITIVE ELECTRODE**

(30) Priority: 19.05.2023 JP 2023083497
(71) Applicant: Panasonic Intellectual Property Management Co., Ltd., Kadoma-shi, Osaka 571-0057 (JP)
(72) Inventor: SAGARA, Akihiko, Kadoma-shi, Osaka 571-0057 (JP); OKI, Yukihiro, Kadoma-shi, Osaka 571-0057 (JP); SHIRAKAMI, Atsuro, Kadoma-shi, Osaka 571-0057 (JP)
(74) Representative: Eisenführ Speiser
(86) International application number: PCT/JP2024/018040
(87) International publication number: WO 2024/242000

(57) **Abstract**

A coated active material 10 according to the present disclosure includes: a positive electrode active material; a halogen-containing layer 12 coating at least a portion of a surface of a particle 11 of the positive electrode active material; and a phosphorus-containing layer 13 coating at least a portion of the surface of the halogen-containing layer 12. The halogen-containing layer 12 is positioned between the surface of the particle 11 and the phosphorus-containing layer 13. The halogen-containing layer 12 includes a halide and is in contact with the surface of the particle 11. The phosphorus-containing layer 13 includes a phosphate compound.

## Description

### TECHNICAL FIELD

The present disclosure relates to a coated active material, a positive electrode, a secondary battery, and a method for manufacturing a positive electrode.

### BACKGROUND ART

Conventional secondary batteries are known to undergo side reactions such as reduction and dissolution of transition metals contained in active materials as well as decomposition reactions of electrolyte solutions caused thereby. Such side reactions accelerate degradation of secondary batteries.

Non Patent Literature 1 describes the addition of tris(trimethylsilyl) phosphate to an electrolyte solution to improve the cycle characteristics of a lithium-rich positive electrode material Li[Li_{0.2}Ni_{0.13}Mn_{0.54}Co_{0.13}]O₂. Patent Literature 1 discloses a positive electrode material including a positive electrode active material and a solid electrolyte material coating at least a portion of the surface of the positive electrode active material, wherein the solid electrolyte material includes Li, Ti, M1, and F, and M1 is at least one selected from the group consisting of Ca, Mg, Al, Y, and Zr. Patent Literature 2 discloses a coated positive electrode active material having a coating including at least one selected from the group consisting of a specific phosphonate ester and a specific phosphorous triester. Patent Literature 3 discloses a battery in which at least one of a positive electrode and an electrolyte solution contains a phosphorus compound having a P-OH structure. Patent Literature 4 discloses a nonaqueous electrolyte secondary battery in which a nonaqueous electrolyte solution contains at least one phosphorus compound selected from the group consisting of phosphine oxide, phosphonate ester, and phosphinate ester.

### CITATION LIST

### Non Patent Literature

Non Patent Literature 1: J. Zhang et al. "Artificial Interface Deriving from Sacrificial Tris(trimethylsilyl) phosphate Additive for Lithium Rich Cathode Materials" Electrochimica Acta 117 (2014) 99-104.

### Patent Literature

Patent Literature 1: WO 2021-187391
Patent Literature 2: WO 2017-126276
Patent Literature 3: JP 2013-152825 A
Patent Literature 4: JP 2013-055031 A

### SUMMARY OF INVENTION

### Technical Problem

The present disclosure provides a coated active material that can suppress side reactions in the positive electrode while maintaining sufficient discharge capacity of the battery.

### Solution to Problem

The coated active material according to the present disclosure includes:
a positive electrode active material;
a halogen-containing layer coating at least a portion of a surface of a particle of the positive electrode active material; and
a phosphorus-containing layer coating at least a portion of a surface of the halogen-containing layer, wherein
the halogen-containing layer is positioned between the surface of the particle and the phosphorus-containing layer,
the halogen-containing layer includes a halide and is in contact with the surface of the particle, and
the phosphorus-containing layer includes a phosphate compound.

### Advantageous Effects of Invention

The present disclosure provides a coated active material that can suppress side reactions in the positive electrode while maintaining sufficient discharge capacity of the battery.

### BRIEF DESCRIPTION OF DRAWINGS

FIG. 1 is a cross-sectional view schematically showing the configuration of a coated active material 10 according to Embodiment 1.
FIG. 2A is a process diagram showing a method for manufacturing a positive electrode.
FIG. 2B is a process diagram showing another method for manufacturing a positive electrode.
FIG. 3 is a cross-sectional view schematically showing the configuration of a positive electrode 16 according to Embodiment 3.
FIG. 4 is a longitudinal sectional view schematically showing a secondary battery 100 according to Embodiment 4.

### DESCRIPTION OF EMBODIMENTS

Embodiments of the present disclosure are described in detail below with reference to the drawings. The present disclosure is not limited to the following embodiments.

### (Embodiment 1)

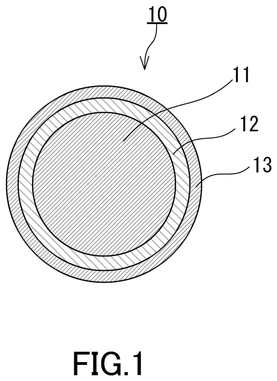

FIG. 1 is a cross-sectional view schematically showing the configuration of a coated active material 10 according to Embodiment 1. The coated active material 10 includes a positive electrode active material, a halogen-containing layer 12 coating at least a portion of the surface of a particle 11 of the positive electrode active material, and a phosphorus-containing layer 13 coating at least a portion of the surface of the halogen-containing layer 12. The halogen-containing layer 12 is positioned between the surface of the particle 11 and the phosphorus-containing layer 13. The halogen-containing layer 12 includes a halide and is in contact with the surface of the particle 11. The phosphorus-containing layer 13 includes a phosphate compound.

In a battery, contact between the positive electrode active material and the electrolyte causes side reactions such as metal dissolution from the positive electrode active material and gas generation due to decomposition reaction of the electrolyte, resulting in degradation of the battery. On the other hand, when a coating of a phosphate compound is formed on the surface of the positive electrode active material in an acidic environment to hinder contact between the positive electrode active material and the electrolyte, the surface of the positive electrode active material is deteriorated, resulting in a reduction in the battery capacity. In the coated active material 10 of the present disclosure, the halogen-containing layer 12 coats the surface of the particle 11 of the positive electrode active material in contact with the surface, and the phosphorus-containing layer 13 coats the halogen-containing layer 12. That is, the halogen-containing layer 12 is positioned between the surface of the particle 11 of the positive electrode active material and the phosphorus-containing layer 13. According to this configuration, contact between the phosphate compound and the positive electrode active material is hindered, suppressing deterioration of the positive electrode active material, and in this state, side reactions such as metal dissolution in the positive electrode can be suppressed. Therefore, while sufficient discharge capacity of the battery is maintained, side reactions in the positive electrode can be suppressed.

The positive electrode active material can be a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like. In particular, when a lithium-containing transition metal oxide or a lithium-containing transition metal phosphate is used as the positive electrode active material, the battery can be manufactured at a reduced cost and exhibit an increased average discharge voltage. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate.

The positive electrode active material may include a lithium nickel oxide having a layered rock salttype crystal structure. The proportion of Ni among metal elements excluding Li that are contained in the lithium nickel oxide may be 50 atomic percent (at%) or more. The lithium nickel oxide may include other transition metals. Lithium nickel oxides are useful for achieving a high operating voltage. According to the configuration of the coated active material according to Embodiment 1, dissolution of metal ions from the positive electrode active material can be suppressed. Since nickel is susceptible to dissolution from the positive electrode active material, the technique of the present disclosure is particularly expected to be effective in suppressing such dissolution.

The lithium nickel oxide may be represented by the following composition formula (I). An element Me1 is at least one selected from the group consisting of V, Co, and Mn. An element Me2 is at least one selected from the group consisting of Mg, Al, Ca, Ti, Cu, Zn, and Nb. The composition formula (I) satisfies 0.9 ≤ α1 ≤ 1.10, -0.05 ≤ β1 ≤ 0.05, 0.5 ≤ x1 < 1, 0 ≤ x2 ≤ 0.5, and 0 ≤ 1-x1-x2 ≤ 0.5.

Li_{α1}Niₓ₁Me1ₓ₂Me2₍₁₋ₓ₁₋ₓ₂₎O_{2+β1} (I)

In the composition formula (I), 0 < x2 ≤ 0.5 may be satisfied, and 0 < 1-x1-x2 ≤ 0.5 may be satisfied.

The shape of the particle 11 of the positive electrode active material is not particularly limited. The shape of the particle 11 is, for example, an acicular, flaky, spherical, or ellipsoidal shape.

The halogen-containing layer 12 is a layer containing a halide, and coats at least a portion of the surface of the particle 11 of the positive electrode active material and is in contact with the surface of the particle 11 of the positive electrode active material. The halogen-containing layer 12 is formed by the halide being present in contact with at least a portion of the surface of the particle 11 of the positive electrode active material.

The halogen-containing layer 12 may include the halide as the main component. Here, the term "main component" means a component having the highest mass content.

The halogen-containing layer 12 may consist substantially of the halide. "The halogen-containing layer 12 consists substantially of the halide" means that the mass percentage of the halide in the halogen-containing layer 12 is 97 mass% or more. The mass percentage of the halide in the halogen-containing layer 12 may be 98 mass% or more or 99 mass% or more. The halogen-containing layer 12 may consist of the halide, except for unavoidable impurities.

The halide may have lithium-ion conductivity. The halide may be a halide solid electrolyte having lithium-ion conductivity.

The halide may be a fluoride. This halide exhibits excellent oxidation resistance. Accordingly, the coated active material 10, which includes the halogen-containing layer 12 between the surface of the particle 11 of the positive electrode active material and the phosphorus-containing layer 13, can enhance battery characteristics such as discharge capacity.

The halide may include Li, M1, M2, and F, where M1 is at least one selected from the group consisting of Ti and Nb, and M2 is at least one selected from the group consisting of Ca, Mg, Al, Y, and Zr. According to this configuration, the halide exhibits high ionic conductivity.

The halide may consist substantially of Li, M1, M2, and F. The phrase "the halide consists substantially of Li, M1, M2, and F" means that the molar ratio (i.e., mole fraction) of the sum of the amounts of substance of Li, M1, M2, and F to the total of the amounts of substance of all the elements constituting the halide is 90% or more. In one example, the molar ratio may be 95% or more.

M1 may include Ti. M2 may include Al. The halide may be such that M1 includes Ti and M2 includes Al. That is, the halide may include Li, Ti, Al, and F, and may consist substantially of Li, Ti, Al, and F. According to this configuration, the halide exhibits high ionic conductivity.

The halide may have a composition represented by the following composition formula (II). In the composition formula (II), α2, β2, y2, and δ2 are each independently a value greater than 0.

Li_{α2}M1_{β2}M2_{γ2}X_{δ2} Formula (II)

In the composition formula (II), δ2 may be a value greater than α2, and δ2 may be a value greater than each of α2, β2, and γ2.

In the composition formula (II), 1.7 ≤ α2 ≤ 3.7, 0 < β2 < 1.5, 0 < γ2 < 1.5, and 5 ≤ δ2 ≤ 7 may be satisfied.

In the composition formula (II), 2.5 ≤ α2 ≤ 3, 0.1 ≤ β2 ≤ 0.6, 0.4 ≤ γ2 ≤ 0.9, and δ2 = 6 may be satisfied.

According to this configuration, the halide exhibits high ionic conductivity. Accordingly, battery characteristics can be enhanced.

The halide may be represented by the following composition formula (III). In the composition formula (III), 0 < x3 < 1 and 0 < b3 ≤ 1.5 are satisfied.

Li_{6-(4-x3)b3}(Ti₁₋ₓ₃Alₓ₃)_{b3}F₆ Formula (III)

In the composition formula (III), 0.1 ≤ x3 ≤ 0.9 may be satisfied and 0.1 ≤ x ≤ 0.7 may be satisfied to enhance the ionic conductivity of the first solid electrolyte.

The halide may have a composition represented by the following composition formula (IV). In the composition formula (IV), x4, y4, and b4 satisfy 0 < x4 < 1, 0 < y4 < 1, 0 < x4 + y4 ≤ 1, and 0.8 ≤ b4 ≤ 1.1, and m is the valence of M2.

Li_{6-{5-x4-(5-m)y4}b4}(Nb_{1-x4-y4}Tiₓ₄M2_{y4})_{b4}F₆ Formula (IV)

In the composition formula (IV), when M2 includes a plurality of elements, m is the sum of the products obtained by multiplying the composition ratio of each element by the valence of the element. For example, when M2 includes an element Met1 and an element Met2 where the composition ratio of the element Met1 is a1, the valence of the element Met1 is m1, the composition ratio of the element Met2 is a2, and the valence of the element Met2 is m2, then m is expressed as m1a1 + m2a2.

The thickness of the halogen-containing layer 12 may be 1 nm or more and 1 µm or less or 5 nm or more and 0.1 µm or less.

The mass ratio of the halogen-containing layer 12 to the positive electrode active material may be 0.01% or more and 20% or less or 0.01% or more and 5% or less. The mass ratio of the halide contained in the halogen-containing layer 12 to the positive electrode active material may be 0.01% or more and 20% or less or 0.01% or more and 5% or less.

The mass ratio of the halogen-containing layer 12 to the positive electrode active material can be measured, for example, by energy dispersive X-ray spectroscopy employing a transmission electron microscope (TEM-EDX).

The phosphorus-containing layer 13 is a layer containing a phosphate compound and coats at least a portion of the surface of the halogen-containing layer 12. The phosphorus-containing layer 13 is formed by the phosphate compound being present on at least a portion of the surface of the halogen-containing layer 12, which coats at least a portion of the surface of the particle 11 of the positive electrode active material. The phosphorus-containing layer 13 may be in contact with the surface of the halogen-containing layer 12. The phosphorus-containing layer 13 may not be in contact with the surface of the particle 11 of the positive electrode active material.

The phosphorus-containing layer 13 may consist substantially of the phosphate compound. The phrase "the phosphorus-containing layer 13 consists substantially of the phosphate compound" means that the mass percentage of the phosphate compound in the phosphorus-containing layer 13 is 97 mass% or more. The mass percentage of the phosphate compound in the phosphorus-containing layer 13 may be 98 mass% or more or 99 mass% or more. The phosphorus-containing layer 13 may consist of the phosphate compound.

**In** the present specification, the term "phosphate compound" means an oxoacid of phosphorus. Examples of the phosphate compound include phosphoric acid, phosphonic acid, phosphinic acid, pyrophosphoric acid, a phosphate ester, a phosphonate ester, a phosphinate ester, a derivative thereof, and a condensate thereof. The phosphate compound may be an organophosphorus compound. In the present specification, the term "organophosphorus compound" means a compound containing carbon and phosphorus. The phosphate compound may be a compound including a carbon-phosphorus bond.

The phosphate compound may include a P-O-P bond. The phosphate compound may be polyphosphoric acid, a polyphosphate ester, or a derivative thereof.

The phosphate compound may include a structure represented by chemical formula (1).

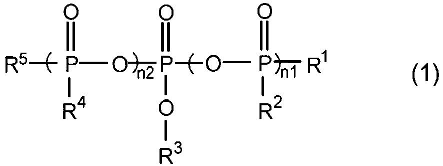

In the chemical formula (1), n1 and n2 are each independently an integer equal to or greater than 0; R¹, R², R⁴, and R⁵ each independently represent -OR or -(CH₂)ₘ₁X1; R³ and R each independently represent a direct bond to the halide in the halogen-containing layer 12, a hydrogen atom, -(CH₂)ₘ₂X2, a trimethylsilyl group, or a triethylsilyl group; m1 is an integer from 0 to 15; m2 is a natural number from 1 to 3; X1 and X2 each independently represent a hydrogen atom, a hydroxy group, an amino group, a carboxy group, a cyano group, or a fluorine atom; when a plurality of R²s are present, the plurality of R²s are independent of each other; and when a plurality of R⁴s are present, the plurality of R⁴s are independent of each other.

Owing to the inclusion of this structure, the phosphate compound is relatively stable even in a highvoltage environment. Accordingly, even when the upper limit voltage of a secondary battery is high, for example, exceeding 4.3 V, it is possible to sufficiently suppress oxidative decomposition of the electrolyte, suppressing side reactions such as metal dissolution from the positive electrode active material.

In the chemical formula (1), n1 and n2 each may be independently 1 or greater; at least one selected from the group consisting of n1 and n2 may be 1 or greater; n1 and n2 each may be independently 500 or smaller; X1 may be a hydrogen atom; and X2 may be a hydrogen atom.

In the chemical formula (1), m1 may be an integer from 0 to 11 or an integer from 0 to 6. When m1 is an integer from 0 to 6, side reactions can be further suppressed.

In the chemical formula (1), m2 may be 1 or 2.

Examples of the phosphate compound include a silyl phosphite, phosphonic acid, phosphoric acid, pyrophosphoric acid, and a condensate thereof. The phosphate compound may contain Si. The phosphate compound may be a silyl phosphite, tris(trimethylsilyl) phosphate (TMSP), or a TMSP-derived compound, such as a condensate of TMSP. In the chemical formula (1), R¹, R², R⁴, and R⁵ each may independently represent -OR, and R³ and R each may independently represent a direct bond to the halide in the halogen-containing layer 12, a hydrogen atom, or a trimethylsilyl group.

In the chemical formula (1), R³ may represent a direct bond to the halide.

The phosphorus-containing layer 13 may include one or two or more phosphate compounds.

The phosphorus-containing layer 13 coats at least a portion of the surface of the halogen-containing layer 12 coating the surface of the particle 11 of the positive electrode active material. According to this configuration, direct contact between the phosphate compound and the positive electrode active material is hindered. Therefore, while deterioration of the positive electrode active material is suppressed to maintain sufficient discharge capacity, side reactions such as metal dissolution in the positive electrode can be suppressed.

The phosphorus-containing layer 13 may coat the entire surface of the halogen-containing layer 12.

The phosphorus-containing layer 13 may be in contact with the halogen-containing layer 12. As described above, the phosphorus-containing layer 13 may not be in contact with the surface of the particle 11 of the positive electrode active material.

The phosphate compound may or may not form a chemical bond to the halide in the halogen-containing layer 12. The phosphate compound may be physically adhered to the halogen-containing layer 12.

The mass ratio of P (phosphorus) contained in the phosphorus-containing layer 13 to the positive electrode active material may be 0.1% or more. According to this configuration, it is possible to sufficiently hinder contact between the positive electrode active material and the electrolyte solution, suppressing side reactions at the interface between the surface of the positive electrode active material and the electrolyte solution.

The mass ratio of P contained in the phosphorus-containing layer 13 to the positive electrode active material can be measured, for example, by TEM-EDX. For example, the location and proportion of P are identified by TEM-EDX, and then the mass of P is measured by inductively coupled plasma atomic emission spectrometry (ICP-AES). Thus, the mass of P contained in the phosphorus-containing layer 13 can be determined. The mass of the positive electrode active material can also be measured, for example, by ICP-AES. Through the above, the mass ratio of P contained in the phosphorus-containing layer 13 can be calculated. For example, when the phosphate compound is an organophosphorus compound, elemental mapping by TEM-EDX can be used to identify the phosphorus-containing layer 13 as a region having high concentrations of P and C on the surface of the halogen-containing layer 12 coating the surface of the particle 11 of the positive electrode active material.

In the coated active material 10, the mass ratio of P contained in the phosphorus-containing layer 13 to the positive electrode active material may be 3 mass% or less or 2 mass% or less. The mass ratio of P contained in the phosphorus-containing layer 13 to the positive electrode active material may be 0.1 mass% or more and 2 mass% or less.

The ratio of the mass of P at the interface between the surface of the particle 11 of the positive electrode active material and the halogen-containing layer 12 to the mass of P on the particle surface of the coated active material 10 may be 3% or less. The ratio of the mass of the phosphate compound at the interface between the surface of the particle 11 of the positive electrode active material and the halogen-containing layer 12 to the mass of the phosphate compound on the particle surface of the coated active material 10 may be 3% or less. The phosphate compound may not be present at the interface between the surface of the particle 11 of the positive electrode active material and the halogen-containing layer 12.

The thickness of the phosphorus-containing layer 13 may be 0.001 µm or more and 2 µm or less or 0.001 µm or more and 1 µm or less.

The coated active material 10 is in the form of particles, for example. The shape of the particles of the coated active material 10 is not particularly limited. The shape of the particles of the coated active material 10 is an acicular, flaky, spherical, or ellipsoidal shape.

### (Method for Manufacturing Coated Active Material)

The coated active material 10 can be manufactured, for example, by the following method.

The halogen-containing layer 12 is obtained by adhering a halide to the surface of the particle 11 of the positive electrode active material. For example, raw material powders are mixed to prepare a halide. Thereafter, the halide is adhered to the surface of the particle 11 of the positive electrode active material.

The method for adhering the halide to the surface of the particle 11 of the positive electrode active material is not particularly limited. For example, a powder of the positive electrode active material is coated with the halide by a mechanochemical method, thereby forming the halogen-containing layer 12 on the surface of the particle 11 of the positive electrode active material. The positive electrode active material and the halide are mixed in an appropriate ratio to obtain a mixture, and the mixture is subjected to a milling process to impart mechanical energy to the mixture. A mixer such as a ball mill can be used for the milling process. Examples of devices capable of imparting mechanical energy include ball mills and processing devices (particle composing machines), such as "MECHANO FUSION" (manufactured by Hosokawa Micron Corporation), "NOBILTA" (manufactured by Hosokawa Micron Corporation), and "BALANCE GRAN" (manufactured by Freund-Turbo Corporation).

Next, a solution including a phosphate compound and a solvent is prepared.

As described above, the phosphate compound includes, for example, the structure represented by the chemical formula (1). The phosphate compound in the raw material stage refers to a compound in a state before condensation with other phosphate compounds and/or bonding to the halide can occur, and thus can be distinguished from the phosphate compound contained in the phosphorus-containing layer 13. The phosphate compound in the raw material stage includes, for example, a structure represented by chemical formula (2).

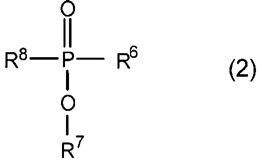

In the chemical formula (2), R⁷ represents a hydrogen atom, -(CH₂)ₖ₁Y1, a trimethylsilyl group, or a triethylsilyl group; R⁶ and R⁸ each independently represent -OR or -(CH₂)ₖ₂Y2; R represents a hydrogen atom, -(CH₂)ₖ₃Y3, a trimethylsilyl group, or a triethylsilyl group; k1 and k3 are each independently a natural number from 1 to 3; k2 is an integer from 0 to 15; and Y1, Y2, and Y3 each independently represent a hydrogen atom, a hydroxy group, an amino group, a carboxy group, a cyano group, or a fluorine atom.

The phosphate compound in the raw material stage may include at least one selected from the group consisting of a silyl phosphite and phosphoric acid. The silyl phosphite may be TMSP.

As the solvent, a cyclic carbonate, a chain carbonate, a cyclic carboxylate, or the like is used. Examples of cyclic carbonates include propylene carbonate (PC), ethylene carbonate (EC), and fluoroethylene carbonate (FEC). Examples of chain carbonates include diethyl carbonate (DEC), ethyl methyl carbonate (EMC), and dimethyl carbonate (DMC). Examples of cyclic carboxylates include γ-butyrolactone (GBL) and γ-valerolactone (GVL). One solvent may be used alone, two or more solvents may be used in combination. From the viewpoint of the manufacturing process, a solvent having a high boiling point is preferred. The boiling point of the solvent is, for example, 200°C or more.

The concentration of the phosphate compound in the solution may be 0.1 mass% or more and 20 mass% or less.

Next, the prepared solution is brought into contact with the particle 11 of the positive electrode active material having the halogen-containing layer 12 formed on its surface. The bringing the solution into contact may be conducted by immersing the above particle in the solution or by applying the solution to the above particle by spraying or the like. The solution may be brought into contact with the particle of the positive electrode active material by forming the positive electrode active material including the above particle into a layer and either applying the solution onto the layer or impregnating the layer with the solution. The contact time with the solution is, for example, 15 minutes or more and 120 minutes or less, and the temperature is, for example, 20°C or more and 60°C or less.

The particle of the positive electrode active material brought into contact with the solution is dried. The drying time may be, for example, 5 minutes or more and 48 hours or less. Thus, the coated active material 10 according to Embodiment 1 is obtained. The drying may be vacuum drying. Vacuum drying means drying under a pressure lower than atmospheric pressure.

After the bringing the solution into contact and before the vacuum drying, the particle of the positive electrode active material may be washed. For example, a solvent is used to wash the particle of the positive electrode active material. The solvent used for the washing may be the solvent used in the above solution including a phosphate compound and a solvent, and may be, for example, DMC. According to the above, by-products such as decomposition products of the phosphate compound can be removed. Consequently, gas generation in the positive electrode due to reactions between the by-products and the electrolyte can be suppressed.

### (Embodiment 2)

A method for manufacturing a positive electrode according to Embodiment 2 satisfies at least one selected from the group consisting of the following (A) and (B):
(A) including:
   forming a halogen-containing layer on at least a portion of a surface of a particle of a positive electrode active material;
   forming a positive electrode active material layer including the particle, on which the halogen-containing layer is formed, on a positive electrode current collector;
   bringing a solution including a phosphate compound and a solvent into contact with the positive electrode active material layer; and
   after the bringing the solution into contact, drying the positive electrode active material layer; and
(B) including:
   forming a halogen-containing layer on at least a portion of a surface of a particle of a positive electrode active material;
   bringing a solution including a phosphate compound and a solvent into contact with the particle on which the halogen-containing layer is formed;
   after the bringing the solution into contact, drying the particle; and
   forming a positive electrode active material layer including the particle obtained after undergoing the drying on a positive electrode current collector.

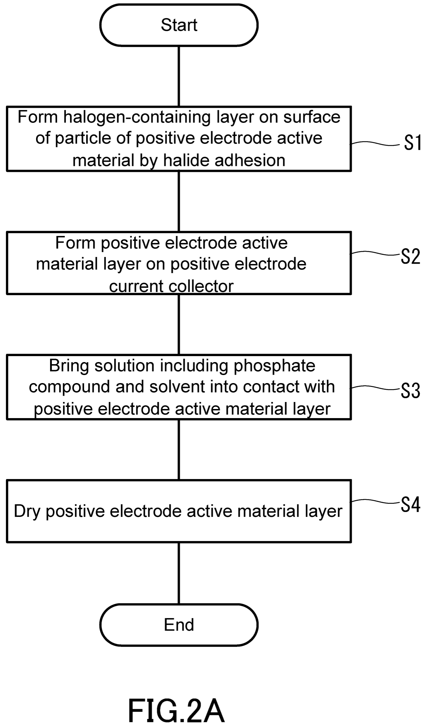

FIG. 2A is a process diagram showing a method for manufacturing a positive electrode.

In Step S1, a halogen-containing layer is formed on at least a portion of the surface of a particle of a positive electrode active material.

The halogen-containing layer is a layer containing a halide. The halide is, for example, the halide described above in Embodiment 1.

In Step S1, the halogen-containing layer may be formed by a mechanochemical method.

In Step S2, a positive electrode active material layer including the particle, on which the halogen-containing layer is formed, is formed on a positive electrode current collector. In Step S2, the positive electrode active material layer is formed as follows, for example.

A positive electrode slurry including the positive electrode active material obtained in Step S1 is prepared. For example, the positive electrode active material, a binder, and a conductive additive are dispersed in a dispersion medium to prepare the positive electrode slurry.

The positive electrode slurry is applied to the positive electrode current collector to form the positive electrode active material layer. Specifically, a coating film is formed by applying the positive electrode slurry to the positive electrode current collector. The dispersion medium is removed from the coating film, and the positive electrode active material layer is thus obtained. An example of a method for removing the dispersion medium is heating the coating film. The dispersion medium is, for example, N-methyl-2-pyrrolidone (NMP). Thus, the positive electrode active material layer is formed on the positive electrode current collector.

In Step S3, a solution including a phosphate compound and a solvent is brought into contact with the positive electrode active material layer. In Step S3, the bringing the solution into contact with the positive electrode active material layer may be conducted by impregnating the positive electrode active material layer formed on the positive electrode current collector with the solution, or by applying the solution onto the positive electrode active material layer. The contact time is, for example, 15 minutes or more and 120 minutes or less.

The solution including a phosphate compound and a solvent is, for example, the solution described in Embodiment 1. That is, the phosphate compound may include the structure represented by the above chemical formula (2). The phosphate compound may include TMSP. The solvent may be the solvent described above in Embodiment 1.

In Step S4, the positive electrode active material layer is dried. The drying time in Step S4 may be, for example, 5 minutes or more and 48 hours or less.

After Step S3 and before Step S4, the positive electrode active material layer may be washed. For example, a solvent is used to wash the positive electrode active material layer. The solvent used for the washing may be the solvent used in the solution including a phosphate compound and a solvent, and may be, for example, DMC. According to the above, by-products such as decomposition products of the phosphate compound can be removed. Consequently, gas generation in the positive electrode due to reactions between the by-products and the electrolyte can be suppressed.

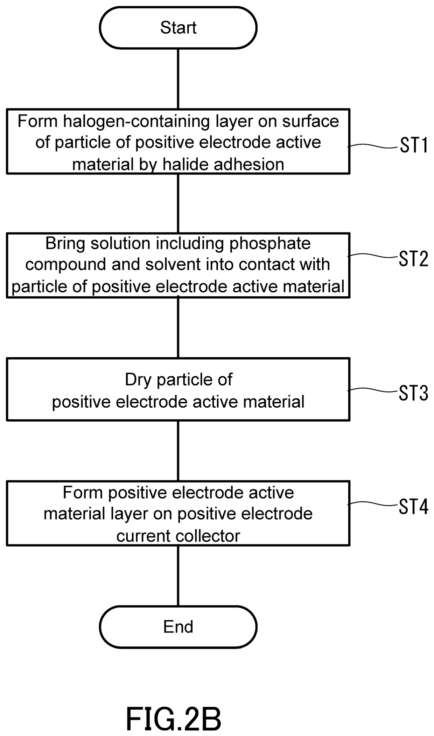

FIG. 2B is a process diagram showing another method for manufacturing a positive electrode.

In Step ST1, a halogen-containing layer is formed on at least a portion of the surface of a particle of a positive electrode active material in the same manner as in Step S1.

In Step ST2, a solution including a phosphate compound and a solvent is brought into contact with the particle of the positive electrode active material obtained in Step ST1. The bringing the solution into contact with the particle of the positive electrode active material may be conducted by immersing the particle of the positive electrode active material in the solution, or by applying the solution to the particle of the positive electrode active material by spraying or the like.

In Step ST3, the particle of the positive electrode active material obtained in Step ST2 is dried. The drying time in Step ST3 may be, for example, 5 minutes or more and 48 hours or less. The drying may be vacuum drying. Vacuum drying means drying under a pressure lower than atmospheric pressure.

In Step ST4, a positive electrode active material layer is formed on a positive electrode current collector. In Step ST4, the positive electrode active material layer is formed on the positive electrode current collector using the particle of the positive electrode active material obtained in Step ST3, in the same manner as in Step S2.

After Step ST2 and before Step ST3, the particle of the positive electrode active material may be washed.

The method for manufacturing a positive electrode of the present disclosure may satisfy the (A) described above.

The method for manufacturing a positive electrode of the present disclosure may satisfy both the (A) and the (B) described above. The method for manufacturing a positive electrode of the present disclosure may include: forming a halogen-containing layer on at least a portion of a surface of a particle of a positive electrode active material; bringing a solution including a phosphate compound and a solvent into contact with the particle on which the halogen-containing layer is formed; after the bringing the solution into contact, drying the particle; forming a positive electrode active material layer including the particle obtained after undergoing the drying on a positive electrode current collector; further bringing a solution including a phosphate compound and a solvent into contact with the positive electrode active material layer; and after the further bringing the solution into contact, drying the positive electrode active material layer. That is, in the method for manufacturing a positive electrode of the present disclosure, Steps S3 and S4 may be conducted after Steps ST1 to ST4.

The mass ratio of P contained in the phosphate compound to the positive electrode active material may be 0.1% or more. That is, the mass ratio of P contained in the phosphate compound in the above-described solution, which is brought into contact with the positive electrode active material layer or the particle of the positive electrode active material, to the positive electrode active material may be 0.1% or more.

### (Embodiment 3)

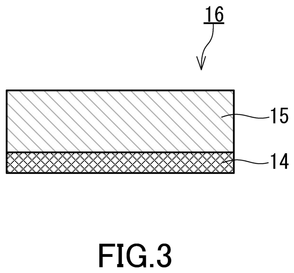

FIG. 3 is a cross-sectional view schematically showing the configuration of a positive electrode 16 according to Embodiment 3. The positive electrode 16 includes a positive electrode current collector 14 and a positive electrode active material layer 15 supported on the positive electrode current collector 14. The positive electrode active material layer 15 includes the coated active material according to Embodiment 1.

The positive electrode active material layer 15 may include only the coated active material according to Embodiment 1 as the positive electrode active material, or may include a positive electrode active material different from the coated active material according to Embodiment 1. The positive electrode active material layer 15 may include the coated active material according to Embodiment 1 on its surface.

The positive electrode active material layer 15 may further include other materials such as a binder, an ion conductor, and a conductive additive.

The positive electrode current collector 14 can be, for example, a metal foil. Examples of a metal constituting the positive electrode current collector 14 include aluminum, titanium, an alloy containing any of these metal elements, and stainless steel.

The positive electrode 16 is manufactured, for example, by the manufacturing method according to Embodiment 2.

### (Embodiment 4)

A secondary battery according to Embodiment 4 includes the positive electrode according to Embodiment 3, a negative electrode, and an electrolyte. By using the positive electrode according to Embodiment 3, characteristics of the secondary battery, such as charge and discharge efficiency, can be improved.

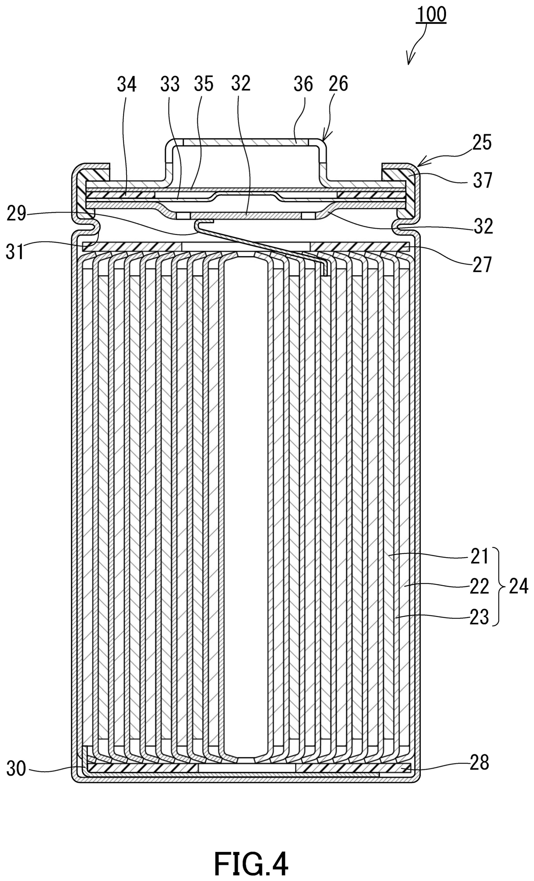

FIG. 4 is a longitudinal sectional view schematically showing a secondary battery 100 according to Embodiment 4. The secondary battery 100 is a cylindrical battery that includes a cylindrical battery case, a wound-type electrode group 24, and an electrolyte solution that is not illustrated. The electrode group 24 is housed in the battery case and is in contact with the electrolyte solution.

The battery case is composed of a case body 25 that is a bottomed cylindrical metal-made container and a sealing body 26 that seals the opening of the case body 25. A gasket 37 is disposed between the case body 25 and the sealing body 26. The gasket 37 ensures hermetic sealing of the battery case. Within the case body 25, insulating plates 27 and 28 are disposed at the respective ends of the electrode group 24 in the direction of the winding axis of the electrode group 24.

The case body 25 has, for example, a stepped portion 31. The stepped portion 31 can be formed by pressing a portion of the side wall of the case body 25 from the outside. The stepped portion 31 may be formed in an annular shape on the side wall of the case body 25 along the circumferential direction of a virtual circle defined by the case body 25. In this case, the sealing body 26 is supported, for example, by the surface of the stepped portion 31 facing the opening.

The sealing body 26 includes a filter 32, a lower valve body 33, an insulating member 34, an upper valve body 35, and a cap 36. In the sealing body 26, these components are stacked in the above order. The sealing body 26 is attached to the opening of the case body 25 so that the cap 36 is located outside the case body 25 and the filter 32 is located inside the case body 25.

The above components of the sealing body 26 are each, for example, disk-shaped or ring-shaped. The above components are electrically connected to each other, except for the insulating member 34.

The electrode group 24 includes a positive electrode 21, a negative electrode 22, and a separator 23. The positive electrode 21, the negative electrode 22, and the separator 23 are all strip-shaped. The width directions of the strip-shaped positive electrode 21 and negative electrode 22 are parallel to the winding axis of the electrode group 24, for example. The separator 23 is disposed between the positive electrode 21 and the negative electrode 22. The positive electrode 21 and the negative electrode 22 are spirally wound with the separator 23 interposed between these electrodes.

When a cross-section of the secondary battery 100 in a direction orthogonal to the winding axis of the electrode group 24 is observed, the positive electrode 21 and the negative electrode 22 are alternately stacked in the radial direction of a virtual circle defined by the case body 25, with the separator 23 interposed between these electrodes.

The positive electrode 21 is electrically connected, via a positive electrode lead 29, to the cap 36 that also serves as the positive electrode terminal. One end of the positive electrode lead 29 is, for example, connected to the vicinity of the center of the positive electrode 21 in the longitudinal direction of the positive electrode 21. The positive electrode lead 29 extends from the positive electrode 21 to the filter 32 through a through hole formed in the insulating plate 27. The other end of the positive electrode lead 29 is, for example, welded to the surface of the filter 32 facing the electrode group 24.

The negative electrode 22 is electrically connected, via a negative electrode lead 30, to the case body 25 that also serves as the negative electrode terminal. One end of the negative electrode lead 30 is, for example, connected to an end of the negative electrode 22 in the longitudinal direction of the negative electrode 22. The other end of the negative electrode lead 30 is, for example, welded to the inner bottom surface of the case body 25.

The constituent elements of the secondary battery 100 are described in detail below.

The positive electrode 21 is the positive electrode according to Embodiment 3.

The negative electrode 22 includes a material having properties of occluding and releasing metal ions (e.g., lithium ions). The negative electrode 22 includes, for example, a negative electrode active material. The negative electrode may include a negative electrode current collector and a negative electrode active material layer supported on the surface of the negative electrode current collector.

The negative electrode current collector is, for example, a foil made of a metal material such as stainless steel, nickel, a nickel alloy, copper, or a copper alloy.

The negative electrode active material layer includes a negative electrode active material. The negative electrode active material can be a material capable of occluding and releasing lithium ions. Examples of the negative electrode active material include lithium titanate, graphite, silicon, a silicon compound, and a NiBi alloy.

The negative electrode active material layer may include other materials such as a conductive additive, an ion conductor, and a binder.

The electrolyte solution may include a nonaqueous solvent and a lithium salt dissolved in the nonaqueous solvent. The concentration of the lithium salt in the electrolyte solution may be, for example, 0.5 mol/L or more and 2 mol/L or less. By controlling the lithium salt concentration within the above range, an electrolyte solution with excellent ion conductivity and moderate viscosity can be obtained. However, the lithium salt concentration is not limited to the above.

The nonaqueous solvent can be a cyclic carbonate, a chain carbonate, a cyclic ether, a chain ether, a nitrile, an amide, or the like. One selected from these solvents may be used, or two or more thereof may be used in combination.

The lithium salt can be lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, lithium difluoro(oxalato)borate, or the like. One selected from these electrolyte salts may be used, or two or more thereof may be used in combination.

The electrolyte solution may further include a phosphate compound, and may include, for example, TMSP. The electrolyte solution may be free of phosphorus.

It is usually preferable that a separator be interposed between the positive electrode and the negative electrode. The separator 23 has high ion permeability as well as moderate mechanical strength and insulation properties. The separator 23 can be a microporous film, a woven fabric, a nonwoven fabric, or the like. The material of the separator 23 can be, for example, a polymer. The polymer may be, for example, a polyolefin, such as polypropylene or polyethylene.

In the secondary battery of the present disclosure, a polymer provided as the separator may be impregnated with the electrolyte solution, for example. That is, the secondary battery of the present disclosure may have a structure in which an electrolyte solution and a polymer are used in combination.

The secondary battery of the present disclosure may further include a solid electrolyte as an electrolyte. That is, the secondary battery of the present disclosure may have a hybrid structure in which an electrolyte solution and a solid electrolyte are used in combination. Examples of the solid electrolyte material include a halide solid electrolyte, a sulfide solid electrolyte, an oxide solid electrolyte, and an organic polymer solid electrolyte. In the present disclosure, the term "halide solid electrolyte" means a solid electrolyte that contains a halogen element as the main component of the anions. The term "sulfide solid electrolyte" means a solid electrolyte that contains sulfur as the main component of the anions. The term "oxide solid electrolyte" means a solid electrolyte that contains oxygen as the main component of the anions. The term "main component of the anions" means the anion having the largest amount of substance among all the anions constituting the solid electrolyte. The secondary battery of the present disclosure can include a halide solid electrolyte.

In the present disclosure, as an example of the structure of the secondary battery according to Embodiment 3, the configuration example shown in FIG. 4 is described. In this example, the secondary battery includes a stacked-type electrode group in which a positive electrode and a negative electrode are stacked with a separator interposed therebetween, and an electrolyte solution, both of which are housed in an exterior body. However, the secondary battery according to the present disclosure is not limited to this configuration example. The secondary battery according to the present disclosure may be in any form such as a cylindrical type, a prismatic type, a coin type, a button type, or a laminated type. Furthermore, as the electrode group in the secondary battery according to the present disclosure, the stacked-type electrode group may be replaced with any other type of electrode group such as an electrode group in which a positive electrode and a negative electrode are wound with a separator interposed therebetween.

The application of the coated active material and the positive electrode of the present disclosure is not limited to the secondary battery 100. The coated active material and the positive electrode of the present disclosure can be applied to various secondary batteries in addition to lithium secondary batteries, such as sodium secondary batteries and magnesium secondary batteries.

### (Other Embodiments)

### (Supplementary Description)

The above description of the embodiments discloses the following techniques.

### (Technique 1)

A coated active material including:
a positive electrode active material;
a halogen-containing layer coating at least a portion of a surface of a particle of the positive electrode active material; and
a phosphorus-containing layer coating at least a portion of a surface of the halogen-containing layer, wherein
the halogen-containing layer is positioned between the surface of the particle and the phosphorus-containing layer,
the halogen-containing layer includes a halide and is in contact with the surface of the particle, and
the phosphorus-containing layer includes a phosphate compound.

According to this configuration, it is possible to suppress side reactions in the positive electrode while maintaining sufficient discharge capacity of the battery.

### (Technique 2)

The coated active material according to Technique 1, wherein the halide has lithium-ion conductivity. According to this configuration, it is possible to suppress side reactions in the positive electrode while maintaining sufficient discharge capacity of the battery.

### (Technique 3)

The coated active material according to Technique 1 or 2, wherein the halide includes Li, M1, M2, and F, the M1 is at least one selected from the group consisting of Ti and Nb, and the M2 is at least one selected from the group consisting of Ca, Mg, Al, Y, and Zr. According to this configuration, it is possible to suppress side reactions in the positive electrode while maintaining sufficient discharge capacity of the battery.

### (Technique 4)

The coated active material according to any one of Techniques 1 to 3, wherein the halide has a composition represented by the following composition formula (IV)

Li_{6-{5-x4-(5-m)y4}b4}(Nb_{1-x4-y4}Tiₓ₄M2_{y4})_{b4}F₆ Formula (IV)

where M2 is at least one selected from the group consisting of Ca, Mg, Al, Y, and Zr, x4, y4, and b4 satisfy 0 < x4 < 1, 0 < y4 < 1, 0 < x4 + y4 ≤ 1, and 0.8 ≤ b4 ≤ 1.1, and m is a valence of M2. According to this configuration, it is possible to suppress side reactions in the positive electrode while maintaining sufficient discharge capacity of the battery.

### (Technique 5)

The coated active material according to any one of Techniques 1 to 4, wherein a mass ratio of the halogen-containing layer to the positive electrode active material is 0.01% or more and 20% or less.

### (Technique 6)

The coated active material according to any one of Techniques 1 to 5, wherein the phosphate compound is an organophosphorus compound. According to this configuration, it is possible to suppress side reactions in the positive electrode while maintaining sufficient discharge capacity of the battery.

### (Technique 7)

The coated active material according to any one of Techniques 1 to 6, wherein the phosphate compound includes a P-O-P bond. According to this configuration, it is possible to suppress side reactions in the positive electrode while maintaining sufficient discharge capacity of the battery.

### (Technique 8)

The coated active material according to any one of Techniques 1 to 7, wherein the phosphate compound includes a structure represented by chemical formula (1): 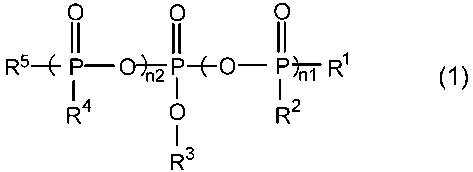
where n1 and n2 are each independently an integer equal to or greater than 0,
R¹, R², R⁴, and R⁵ each independently represent -OR or -(CH₂)ₘ₁X1,
R³ and R each independently represent a direct bond to the halide, a hydrogen atom, -(CH₂)ₘ₂X2, a trimethylsilyl group, or a triethylsilyl group,
m1 is an integer from 0 to 15,
m2 is a natural number from 1 to 3,
X1 and X2 each independently represent a hydrogen atom, a hydroxy group, an amino group, a carboxy group, a cyano group, or a fluorine atom,
when a plurality of R²s are present, the plurality of R²s are independent of each other, and
when a plurality of R⁴s are present, the plurality of R⁴s are independent of each other.

Owing to the inclusion of this structure, the phosphate compound is relatively stable even in a highvoltage environment. Accordingly, even when the upper limit voltage of the battery is high, it is possible to sufficiently suppress oxidative decomposition of the electrolyte, suppressing side reactions such as metal dissolution from the positive electrode active material. Furthermore, the effect of suppressing side reactions can be sustained for a longer period.

### (Technique 9)

The coated active material according to Technique 8, wherein in the chemical formula (1), R¹, R², R⁴, and R⁵ each independently represent -OR, and R³ and R each independently represent a direct bond to the halide, a hydrogen atom, or a trimethylsilyl group. According to this configuration, side reactions in the positive electrode can be further suppressed.

### (Technique 10)

The coated active material according to any one of Techniques 1 to 9, wherein the positive electrode active material includes a lithium nickel oxide, and a proportion of Ni among metal elements excluding Li that are contained in the lithium nickel oxide is 50 at% or more. According to this configuration, a high operating voltage of the battery can be achieved.

### (Technique 11)

A positive electrode including:
a positive electrode current collector; and
a positive electrode active material layer supported on the positive electrode current collector, wherein
the positive electrode active material layer includes the coated active material according to any one of Techniques 1 to 10.

According to this configuration, side reactions in the positive electrode can be suppressed. Accordingly, characteristics of the battery can be improved.

### (Technique 12)

A secondary battery including:
the positive electrode according to Technique 11;
a negative electrode; and
an electrolyte.

According to this configuration, characteristics of the secondary battery can be improved.

### (Technique 13)

A method for manufacturing a positive electrode including a positive electrode current collector and a positive electrode active material layer supported on the positive electrode current collector, the method satisfying at least one selected from the group consisting of the following (A) and (B):
(A) including:
   forming a halogen-containing layer on at least a portion of a surface of a particle of a positive electrode active material;
   forming the positive electrode active material layer including the particle on the positive electrode current collector;
   bringing a solution including a phosphate compound and a solvent into contact with the positive electrode active material layer; and
   after the bringing the solution into contact, drying the positive electrode active material layer; and
(B) including:
   forming a halogen-containing layer on at least a portion of a surface of a particle of a positive electrode active material;
   bringing a solution including a phosphate compound and a solvent into contact with the particle on which the halogen-containing layer is formed;
   after the bringing the solution into contact, drying the particle; and
   forming the positive electrode active material layer including the particle after undergoing the drying on the positive electrode current collector.

According to this configuration of Technique 13, the positive electrode of the present disclosure can be efficiently manufactured.

### (Technique 14)

The method according to Technique 13, wherein when satisfying the (A), the method further includes, after the bringing the solution into contact and before the drying, washing the positive electrode active material layer, and when satisfying the (B), the method further includes, after the bringing the solution into contact and before the drying, washing the particle. According to this configuration, it is possible to manufacture a positive electrode in which side reactions such as oxidative decomposition of the electrolyte can be further suppressed.

### (Technique 15)

The method according to Technique 13 or 14, wherein the halogen-containing layer is formed by a mechanochemical method. According to this configuration, the positive electrode of the present disclosure can be efficiently manufactured.

### (Technique 16)

The method according to any one of Techniques 13 to 15, wherein the phosphate compound includes a structure represented by chemical formula (2): 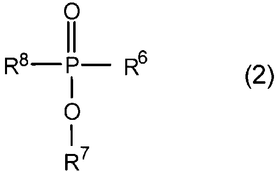
where R⁷ represents a hydrogen atom, -(CH₂)ₖ₁Y1, a trimethylsilyl group, or a triethylsilyl group,
R⁶ and R⁸ each independently represent -OR or -(CH₂)ₖ₂Y2,
R represents a hydrogen atom, -(CH₂)ₖ₃Y3, a trimethylsilyl group, or a triethylsilyl group,
k1 and k3 are each independently a natural number from 1 to 3,
k2 is an integer from 0 to 15, and
Y1, Y2, and Y3 each independently represent a hydrogen atom, a hydroxy group, an amino group, a carboxy group, a cyano group, or a fluorine atom.

Owing to the phosphate compound having this structure, it is possible to efficiently manufacture a positive electrode in which, even when the upper limit voltage is high, oxidative decomposition of the electrolyte can be sufficiently suppressed, suppressing side reactions such as metal dissolution from the positive electrode active material.

### (Technique 17)

The method according to any one of Techniques 13 to 16, wherein the phosphate compound includes tris(trimethylsilyl) phosphate. According to this configuration, it is possible to further efficiently manufacture a positive electrode in which side reactions are suppressed while sufficient discharge capacity of the battery is maintained.

### (Technique 18)

The method according to any one of Techniques 13 to 17, wherein a mass ratio of P contained in the phosphate compound to the positive electrode active material is 0.1% or more. According to this configuration, it is possible to manufacture a positive electrode in which side reactions are suppressed while sufficient discharge capacity of the battery is maintained.

### Examples

The present disclosure is described in more detail below with reference to examples. The following examples are merely illustrative of one embodiment and are not intended to limit the present disclosure.

### (Example 1)

In an argon glove box with a dew point of -60°C or less, LiF, TiF₄, and AlF₃ as the raw material powders were weighed in a molar ratio of LiF:TiF₄:AlF₃ = 3:0.33:0.67. These were pulverized and mixed in a mortar to obtain a mixture. The mixed powder obtained was subjected to a milling process using a planetary ball mill for 12 hours at 500 rpm. Thus, a powder of a halide was obtained. The halide had a composition represented by Li_{2.7}Ti_{0.3}Al_{0.7}F₆ (hereinafter referred to as "LTAF").

A powder of a positive electrode active material having a composition of LiNi_{0.8}Mn_{0.2}O₂ and LTAF were weighed in a molar ratio of the positive electrode active material: LTAF = 100:3. These materials were put into a dry particle composing machine, NOBILTA (manufactured by Hosokawa Micron Corporation) and subjected to a composing process at 6000 rpm for 30 minutes. During this process, the interior of the machine was maintained at 20°C or less. Thus, the coated positive electrode active material coated with LTAF was obtained.

A positive electrode slurry was prepared by stirring the LTAF-coated positive electrode active material, acetylene black (AB), and polyvinylidene fluoride (PVDF) with N-methyl-2-pyrrolidone (NMP) added. The mass ratio of these materials in the positive electrode active material layer was the positive electrode active material:AB:PVDF = 96:2:2.

The positive electrode slurry was applied to the surface of an aluminum foil (1.45 cm × 1.45 cm), the coating film was dried, and then rolled to form the positive electrode active material layer. Thus, an electrode plate was obtained in which the positive electrode active material layer was supported on a positive electrode current collector.

To a solvent mixture obtained by mixing dimethyl carbonate (DMC) and ethanol (EtOH) in a volume ratio of DMC:EtOH = 90:10, tris(trimethylsilyl) phosphate (TMSP) was added to obtain a TMSP solution. The concentration of TMSP in the TMSP solution was set to 0.2 mass%.

The electrode plate was immersed in 200 µL of the TMSP solution. After being immersed for 1 hour, the electrode plate was taken out and washed twice with DMC. The washed electrode plate was placed in a desiccator and vacuum dried for 5 minutes. Thus, a phosphorus-containing layer was formed.

Thus, the positive electrode of Example 1 was obtained. The positive electrode thus obtained includes, at least in the vicinity of its surface, a coated active material that includes: a halogen-containing layer coating the surface of the particle of the positive electrode active material; and a phosphorus-containing layer coating at least a portion of the surface of the halogen-containing layer.

The positive electrode of Example 1, a Li metal foil serving as the counter electrode, a separator, and an electrolyte solution were used to fabricate a laminated half-cell serving as the evaluation cell of Example 1. As the separator, a PP/PE/PP separator was used. The concentration of LiPF₆ in the electrolyte solution was 1.35 mol/L. The solvent for the electrolyte solution contained ethylene carbonate (EC), fluoroethylene carbonate (FEC), ethyl methyl carbonate (EMC), and DMC in a volume ratio of EC:FEC:EMC:DMC = 10:10:5:75. The amount of the electrolyte solution was 150 µL.

### (Example 2)

In the formation of the phosphorus-containing layer, the concentration of TMSP in the TMSP solution was set to 2 mass%. The positive electrode Example 2 was fabricated in the same manner as in Example 1 except for the above. The positive electrode of Example 2 was used to fabricate the evaluation cell of Example 2 in the same manner as in Example 1.

### (Comparative Example 1)

A positive electrode slurry was prepared by stirring the positive electrode active material having the composition of LiNi_{0.8}Mn_{0.2}O₂, acetylene black (AB), and polyvinylidene fluoride (PVDF) with N-methyl-2-pyrrolidone (NMP) added. The mass ratio of these materials in the positive electrode active material layer was the positive electrode active material:AB:PVDF = 96:2:2.

The positive electrode slurry was applied to the surface of an aluminum foil (1.45 cm × 1.45 cm), the coating film was dried, and then rolled to form the positive electrode active material layer. Thus, the positive electrode of Comparative Example 1 was fabricated. That is, the positive electrode of Comparative Example 1 was free of the coated active material including both a halogen-containing layer and a phosphorus-containing layer.

The positive electrode of Comparative Example 1 was used to fabricate the evaluation cell of Comparative Example 1 in the same manner as in Example 1.

### (Comparative Example 2)

The surface of the positive electrode active material having the composition of LiNi_{0.8}Mn_{0.2}O₂ was coated with LTAF in the same manner as in Example 1. The LTAF-coated positive electrode active material was used to form a positive electrode active material layer on a positive electrode current collector in the same manner as in Comparative Example 1. Thus, the positive electrode of Comparative Example 2 was fabricated.

The positive electrode of Comparative Example 2 was used to fabricate the evaluation cell of Comparative Example 2 in the same manner as in Example 1.

### (Comparative Example 3)

A positive electrode slurry was prepared by stirring the positive electrode active material having the composition of LiNi_{0.8}Mn_{0.2}O₂, acetylene black (AB), and polyvinylidene fluoride (PVDF) with N-methyl-2-pyrrolidone (NMP) added. The mass ratio of these materials in the positive electrode active material layer was the positive electrode active material:AB:PVDF = 96:2:2.

The positive electrode slurry was applied to the surface of an aluminum foil (1.45 cm × 1.45 cm), the coating film was dried, and then rolled to form the positive electrode active material layer. Thus, an electrode plate was obtained in which the positive electrode active material layer was supported on a positive electrode current collector.

In the same manner as in Example 1, the electrode plate was immersed in a TMSP solution, washed with DMC, and then vacuum dried. Thus, the positive electrode of Comparative Example 3 was obtained.

The positive electrode of Comparative Example 3 was used to fabricate the evaluation cell of Comparative Example 3 in the same manner as in Example 1.

### (Comparative Example 4)

A positive electrode slurry was prepared by stirring the positive electrode active material having the composition of LiNi_{0.8}Mn_{0.2}O₂, acetylene black (AB), and polyvinylidene fluoride (PVDF) with N-methyl-2-pyrrolidone (NMP) added. The mass ratio of these materials in the positive electrode active material layer was the positive electrode active material:AB:PVDF = 96:2:2.

The positive electrode slurry was applied to the surface of an aluminum foil (1.45 cm × 1.45 cm), the coating film was dried, and then rolled to form the positive electrode active material layer. Thus, an electrode plate was obtained in which the positive electrode active material layer was supported on a positive electrode current collector.

In the same manner as in Example 2, the electrode plate was immersed in a TMSP solution, washed with DMC, and then vacuum dried. Thus, the positive electrode of Comparative Example 4 was obtained. That is, the positive electrode of Comparative Example 4 was obtained in the same manner as in Comparative Example 1, except that the concentration of TMSP in the TMSP solution was set to 2 mass%.

The positive electrode of Comparative Example 4 was used to fabricate the evaluation cell of Comparative Example 4 in the same manner as in Example 1.

### [Charge and Discharge Test]

For the evaluation cells of Examples 1 and 2 and Comparative Examples 1 to 4, at an ambient temperature of 25°C, a constant-current charge was performed at a current value of 0.2C until the voltage reached 4.5 V, followed by a constant-voltage charge at 4.5 V. The charge was terminated at a current value equivalent to 0.02C. After a rest for 20 minutes, a constant-current discharge was performed at a current value of 0.2C until the voltage reached 2.5 V, followed by a rest for 20 minutes. The above charge and discharge were repeated twice. Thus, the initial discharge capacity was evaluated.

The cells, on which the above charge and discharge were performed, were subjected to a temperature change to an ambient temperature of 55°C. For these cells, a constant-current charge was performed at a current value of 0.2C until the voltage reached 4.5 V (hereinafter referred to as a "first charge"), and the charge capacity was measured. Subsequently, a charge was performed in which, at an ambient temperature of 55°C, the voltage of 4.5 V was maintained for 72 hours (hereinafter referred to as a "second charge"). Thereafter, a constant-current discharge was performed at a current value of 0.2C until the voltage reached 2.5 V, and the discharge capacity was measured.

The evaluation results of the charge and discharge test are shown in Table 1. In Table 1, capacity X is the value calculated by the calculation formula: X = (C1 + C2) - D1, where C1 is the charge capacity in the first charge, C2 is the amount additionally charged in the second charge, and D1 is the discharge capacity in the constant-current discharge subsequent to the second charge. That is, the value of the capacity X corresponds to the amount of current that flowed beyond the inherent battery capacity due to the second charge. This current is considered to be caused by a side reaction that occurred due to the second charge, such as metal dissolution from the positive electrode active material. Therefore, the capacity X correlates with the amount of side reactions.

**[Table 1]**

| | Halide | Phosphate compound | TMSP solution concentration [mass%] | Initial discharge capacity [mAh/g] | Capacity X [mAh/g] |
|---|---|---|---|---|---|
| Example 1 | LTAF | TMSP | 0.2 | 206.74 | 14.99 |
| Example 2 | LTAF | TMSP | 2 | 206.53 | 8.47 |
| Comparative Example 1 | - | - | - | 211.83 | 18.85 |
| Comparative Example 2 | LTAF | - | - | 205.07 | 16.28 |
| Comparative Example 3 | - | TMSP | 0.2 | 210.89 | 16.74 |
| Comparative Example 4 | - | TMSP | 2 | 197.41 | 9.29 |

### (Discussion)

In Examples 1 and 2, a sufficient initial discharge capacity of 206 mAh/g or more was obtained, and the value of the capacity X was small, being 15.00 mAh/g or less. Compared with Comparative Example 1, in which the positive electrode active material was not coated, Examples 1 and 2 exhibited no significant decrease in discharge capacity and exhibited a significant reduction in the value of the capacity X. Compared with Comparative Example 2, in which the coated active material including the halogen-containing layer and no phosphorus-containing layer was used, Examples 1 and 2 exhibited higher initial discharge capacity and exhibited a reduction in the value of the capacity X. Compared with Comparative Example 3, in which the coated active material including the phosphorus-containing layer formed from the 0.2 mass% TMSP solution and no halogen-containing layer was used, Examples 1 and 2 exhibited no significant decrease in discharge capacity and exhibited a reduction in the value of the capacity X. Comparative Example 4, in which the coated active material including the phosphorus-containing layer formed from the 2 mass% TMSP solution and no halogen-containing layer was used, exhibited a relatively small value of the capacity X but exhibited insufficient discharge capacity. On the other hand, Example 2, in which the phosphorus-containing layer was formed from the 2 mass% TMSP solution as in Comparative Example 4, exhibited almost no decrease in discharge capacity compared with Example 1 and exhibited suppression in the value of the capacity X. From the above, in Examples 1 and 2, side reactions were suppressed while sufficient initial discharge capacity was maintained. This is because the phosphorus-containing layer suppresses side reactions caused by contact between the positive electrode active material and the electrolyte while the halogen-containing layer suppresses deterioration of the positive electrode active material caused by contact between the phosphate compound and the positive electrode active material. Accordingly, the same effects can be achieved even when materials different from those in the examples are used as the positive electrode active material, the halide, and the phosphate compound. In the battery using the coated active material including the halogen-containing layer and the phosphorus-containing layer, adjusting the concentration of TMSP enabled further suppression of side reactions with no significant decrease in initial discharge capacity.

### INDUSTRIAL APPLICABILITY

The technique of the present disclosure is useful for secondary batteries used as power sources in mobile communication devices, portable electronic devices, electric vehicles, and the like.

## Claims

1. A coated active material comprising:
a positive electrode active material;
a halogen-containing layer coating at least a portion of a surface of a particle of the positive electrode active material; and
a phosphorus-containing layer coating at least a portion of a surface of the halogen-containing layer, wherein
the halogen-containing layer is positioned between the surface of the particle and the phosphorus-containing layer,
the halogen-containing layer comprises a halide and is in contact with the surface of the particle, and
the phosphorus-containing layer comprises a phosphate compound.

2. The coated active material according to claim 1, wherein the halide has lithium-ion conductivity.

3. The coated active material according to claim 1, wherein
the halide comprises Li, M1, M2, and F,
the M1 is at least one selected from the group consisting of Ti and Nb, and
the M2 is at least one selected from the group consisting of Ca, Mg, Al, Y, and Zr.

4. The coated active material according to claim 1, wherein
the halide has a composition represented by the following composition formula (IV):
Li_{6-{5-x4-(5-m)y4}b4}(Nb_{1-x4-y4}Tiₓ₄M2_{y4})_{b4}F₆ Formula (IV)
where M2 is at least one selected from the group consisting of Ca, Mg, Al, Y, and Zr, x4, y4, and b4 satisfy 0 < x4 < 1, 0 < y4 < 1, 0 < x4 + y4 ≤ 1, and 0.8 ≤ b4 ≤ 1.1, and m is a valence of M2.

5. The coated active material according to claim 1, wherein
a mass ratio of the halogen-containing layer to the positive electrode active material is 0.01% or more and 20% or less.

6. The coated active material according to claim 1, wherein the phosphate compound is an organophosphorus compound.

7. The coated active material according to claim 1, wherein the phosphate compound comprises a P-O-P bond.

8. The coated active material according to claim 1, wherein
the phosphate compound comprises a structure represented by chemical formula (1): 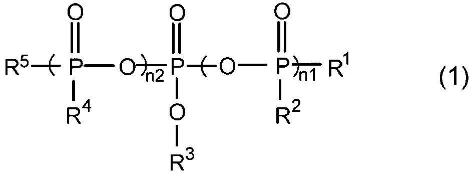
where n1 and n2 are each independently an integer equal to or greater than 0,
R¹, R², R⁴, and R⁵ each independently represent -OR or -(CH₂)ₘ₁X1,
R³ and R each independently represent a direct bond to the halide, a hydrogen atom, -(CH₂)ₘ₂X2, a trimethylsilyl group, or a triethylsilyl group,
m1 is an integer from 0 to 15,
m2 is a natural number from 1 to 3,
X1 and X2 each independently represent a hydrogen atom, a hydroxy group, an amino group, a carboxy group, a cyano group, or a fluorine atom,
when a plurality of R²s are present, the plurality of R²s are independent of each other, and
when a plurality of R⁴s are present, the plurality of R⁴s are independent of each other.

9. The coated active material according to claim 8, wherein
in the chemical formula (1), R¹, R², R⁴, and R⁵ each independently represent -OR, and
R³ and R each independently represent a direct bond to the halide, a hydrogen atom, or a trimethylsilyl group.

10. The coated active material according to claim 1, wherein
the positive electrode active material comprises a lithium nickel oxide, and
a proportion of Ni among metal elements excluding Li that are contained in the lithium nickel oxide is 50 at% or more.

11. A positive electrode comprising:
a positive electrode current collector; and
a positive electrode active material layer supported on the positive electrode current collector, wherein
the positive electrode active material layer comprises the coated active material according to any one of claims 1 to 10.

12. A secondary battery comprising:
the positive electrode according to claim 11;
a negative electrode; and
an electrolyte.

13. A method for manufacturing a positive electrode comprising a positive electrode current collector and a positive electrode active material layer supported on the positive electrode current collector, the method satisfying at least one selected from the group consisting of the following (A) and (B):
(A) comprising:
forming a halogen-containing layer on at least a portion of a surface of a particle of a positive electrode active material;
forming the positive electrode active material layer comprising the particle on the positive electrode current collector;
bringing a solution comprising a phosphate compound and a solvent into contact with the positive electrode active material layer; and
after the bringing the solution into contact, drying the positive electrode active material layer; and
(B) comprising:
forming a halogen-containing layer on at least a portion of a surface of a particle of a positive electrode active material;
bringing a solution comprising a phosphate compound and a solvent into contact with the particle on which the halogen-containing layer is formed;
after the bringing the solution into contact, drying the particle; and
forming the positive electrode active material layer comprising the particle after undergoing the drying on the positive electrode current collector.

14. The method according to claim 13, wherein
when satisfying the (A), the method further comprises, after the bringing the solution into contact and before the drying, washing the positive electrode active material layer, and
when satisfying the (B), the method further comprises, after the bringing the solution into contact and before the drying, washing the particle.

15. The method according to claim 13, wherein
the halogen-containing layer is formed by a mechanochemical method.

16. The method according to claim 13, wherein
the phosphate compound comprises a structure represented by chemical formula (2): 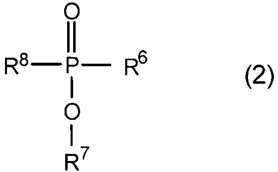
where R⁷ represents a hydrogen atom, -(CH₂)ₖ₁Y1, a trimethylsilyl group, or a triethylsilyl group,
R⁶ and R⁸ each independently represent -OR or -(CH₂)ₖ₂Y2,
R represents a hydrogen atom, -(CH₂)ₖ₃Y3, a trimethylsilyl group, or a triethylsilyl group,
k1 and k3 are each independently a natural number from 1 to 3,
k2 is an integer from 0 to 15, and
Y1, Y2, and Y3 each independently represent a hydrogen atom, a hydroxy group, an amino group, a carboxy group, a cyano group, or a fluorine atom.

17. The method according to claim 13, wherein
the phosphate compound comprises tris(trimethylsilyl) phosphate.

18. The method according to claim 13, wherein
a mass ratio of P contained in the phosphate compound to the positive electrode active material is 0.1% or more.
